# EUROPEAN PATENT APPLICATION

(11) **EP 2 942 651 A1**
(43) Date of publication of application: **11.11.2015**
(21) Application number: 14167240.2
(22) Date of filing: 06.05.2014
(51) Int. Cl.: G02B 5/28, G02B 26/00, G02B 27/10

(54) **Device for optical cut-off filtering and laser beam generating device**

(71) Applicant: DirectPhotonics Industries GmbH, 12849 Berlin (DE)
(72) Inventor: Koch, Ralf, 18144 Lindingö (SE); Ferrario, Fabio, 10247 Berlin (DE); Fritsche, Haro, 10781 Berlin (DE); Kruschke, Bastian, 13405 Berlin (DE)
(74) Representative: Gulde & Partner

(57) **Abstract**

The current invention concerns a device for optical cut-off filtering and a laser beam generating device.

The optical cut-off filtering device (20, 30, 40, 70, 80) is configured for optical cut-off filtering according to a threshold wavelength with one of light with wavelengths below the threshold wavelength and light with wavelengths above the threshold wavelength being reflected and the other being let pass. The device (20, 30, 40, 70, 80) is characterized in that the threshold wavelength can be adjusted without affecting a light path (5) of one of the reflected light and the light let pass.

Having unaffected output light paths makes readjustment of optical devices for further processing of the filtered light superfluous.

## Description

The current invention concerns a device for optical cut-off filtering and a laser beam generating device.

Optical cut-off filtering separates light into two parts, a part having wavelengths below a threshold wavelength and a part having wavelengths above the threshold wavelength. In optical cut-off filtering, one part can transmit, i.e. is let pass, through a corresponding cut-off filter element while the other part is reflected.

This can be achieved by using optical shortpass filters or optical longpass filters, e.g., a dichroic mirror. For instance a cold mirror may be used which comprises dielectric coating layers.

The threshold wavelength of dichroic mirrors is primarily determined by the multilayer structure design. The threshold wavelength may depend on polarization of the light. That is threshold wavelength for p-polarized light may differ, e. g. is lower, than threshold wavelength for s-polarized light. P-polarized light is light polarized parallel in the plane spanned by the direction of incident onto the dichroic mirror and a normal of the dichroic mirror. S-polarized light is light polarized perpendicular to said plane. Hence for elliptically polarized light there is a wavelength range within which a portion is reflected of the light and a remainder is reflected.

The threshold wavelength of dichroic mirrors and other cut-off filter elements can be adjusted by changing an incident angle under which the light to-be-filtered hits the cut-off filter element.

Cut-off filter elements cannot only be used for separating the two parts of the light but also for spectral combination where light having wavelengths above and light having wavelengths below the threshold wavelength stems from different light sources. This is achieved by irradiating the light of the light sources onto the cut-off filter element such that a transmitted part of one light source shares an output light path with the reflected part of the other light source.

For increasing output power two or more dichroic mirrors are used to combine light of different light sources. For instance, arranged in an array, there are three laser diodes, one for emitting laser having a maximum power at a maximum mean wavelength, one for emitting laser having a peak power at a medium mean wavelength and one for emitting laser having a peak power at a minimum mean wavelength. The medium mean wavelength is larger than the minimum mean wavelength and smaller than the maximum mean wavelength. The dichroic mirrors have different threshold wavelengths. At least one thereof is larger than the minimum mean wavelength and smaller than the medium mean wavelength and at least another one thereof is smaller than the maximum mean wavelength and larger than the medium mean wavelength. The dichroic mirrors and the laser diode array are arranged such that the dichroic mirrors can combine light emitted by the array.

Laser diodes emit up to 95% of all power in a small interval around the mean wavelength. Width of the interval scales with the current applied to the laser diodes. Further, there is a dependency between the mean wavelength and the current applied. And, the mean wavelength depends on the temperature of the laser diode. All these effects combined require a minimum difference between the different threshold wavelengths which in turn results in an upper limit of the power of the outputted combined light.

The current invention proposes a device for optical cut-off filtering according to claim 1. The device is configured for optical cut-off filtering according to a threshold wavelength with one of light with wavelengths below the threshold wavelength and light with wavelengths above the threshold wavelength being reflected and the other being let pass. The device is characterized in that the threshold wavelength can be adjusted without affecting a light path of one of the reflected light and the light let pass.

Having unaffected output light paths makes readjustment of optical devices for further processing of the filtered light superfluous.

In an advantageous embodiment, the device can be used to combine further light spectrally into the unaffected light path. This can be done in a way such that the further light spectrally combined into the unaffected light path does not share wavelength with the light with which it is combined on the unaffected light path.

The device may comprise a cut-off filter wheel having different threshold wavelengths at different angular positions wherein the threshold wavelength can be adjusted by turning the cut-off filter wheel.

Or, the device comprises a cut-off filter bar having different threshold wavelengths at different positions of a main axis of the cut-off filter bar wherein the threshold wavelength can be adjusted by linearly moving the cut-off filter bar along the main axis.

As well, the device may comprise at least one conical mirror ring. The conical mirror ring may be arranged coaxially with a conical cut-off filter ring and may have a same base diameter and a same inclination of 45° with 360° corresponding to full circle. The conical mirror ring and the conical cut-off filter ring may open towards each other. The conical mirror ring may have its center at a first axial position and the conical cut-off filter ring may have its center at a different second axial position. The device may further comprise scanning mirrors arranged at the first and the second axial position. The scanning mirrors may have orthogonal optical axes which are inclined by 45° with respect to the axis of the respective conical ring and the conical cut-off filter ring may have different threshold wavelengths at different angular positions such that the threshold wavelength can be adjusted by turning the scanning mirrors while maintaining the optical axes in orthogonal.

In an embodiment, the device may even further comprise two further conical mirror rings of which one is arranged concentrically with the conical cut-off filter ring with its center at the second axial position and has a same opening direction as the conical cut-off filter ring and of which the other is arranged coaxially with the conical cut-off filter ring, i.e. at a different third position, and has a same opening direction as the conical mirror ring. The first axial position may be between the second and the third position and the two further conical mirror rings may have a further same base diameter which is larger than the same base diameter. Said other of the further conical mirror rings may have a corresponding further scanning mirror wherein the further scanning mirror has a further optical axis in parallel to the optical axis of the scanning mirror corresponding to the conical mirror ring. The threshold wavelength then can be adjusted by turning the further scanning mirror together with the scanning mirrors while maintaining the further optical axis in parallel to the optical axis of the scanning mirror corresponding to the conical mirror ring.

The device may comprise a retroreflector, the retroreflector being composed of a mirror attached to a cut-off filter element such that optical axes of the mirror and of the pass filter are perpendicular to each other. Then the filtering and the spectral combining can be achieved by the cut-off filter element wherein the retroreflector can be turned around a further axis perpendicular to the optical axes for adjusting the threshold wavelength. Turning the retroreflector induces a variation of a lateral position of an incident light path. On the incident light path the further light has to hit the cut-off filter element in order to be spectrally combined on the unaffected light path. Therefore the device may further comprise a compensator plate for diverting the further light onto the incident light path. Then the variation can be compensated of the lateral position by turning the compensator plate such that a further incident light path remains unchanged on which the further light has to hit the compensator plate to be reflected on the incident light path.

The threshold wavelength can be adjusted in discrete steps, or, the threshold wavelength can be adjusted continuously.

The current invention further proposes a laser beam generating device according to claim 11. The laser beam generating device comprises at least two devices according to claim 1, a pair of laser source elements for emitting laser having a peak power at a maximum mean wavelength and a minimum mean wavelength and at least one further laser source element having a medium mean wavelength. The medium mean wavelength is larger than the minimum mean wavelength and smaller than the maximum mean wavelength. The at least two devices have different threshold wavelengths. At least one thereof is larger than the minimum mean wavelength and smaller than the medium mean wavelength and at least another one thereof is smaller than the maximum mean wavelength and larger than the medium mean wavelength. The at least two devices, the pair of laser source elements and the at least one further laser source element are arranged such that the at least two devices can combine light emitted by the pair of laser source elements and the at least one further laser source element. The laser beam generating device further comprises means for determining shift of at least the medium mean wavelength and means for adjusting the threshold wavelength of at least one of the at least two devices according the determined shift.

Through the adjustment of the threshold wavelengths according to shift of the mean wavelength a channel width, i.e. the wavelength difference between the different threshold wavelengths, need not be chosen larger than a maximum shift. Similarly, the wavelength difference between neighboring mean wavelengths can be reduced and more power can be output in a given wavelength range.

In an embodiment the laser beam generating device further comprises a power supply for supplying power to all laser source elements wherein the shift depends on a current applied and wherein a maximum shift is larger than a difference between the different threshold wavelengths.

The at least one further laser source element may be configured to emit laser with a peak width at most equal to a maximum peak width. Then, a sum of the maximum shift and the maximum peak width may be larger than a difference between the different threshold wavelengths.

The different embodiments of this invention can be combined advantageously with each other.

Below, exemplary embodiments of the invention will be described in more detail by help of the figures wherein
- Figure 1: shows a first exemplary embodiment of the device for cut-off filtering according to the invention comprising a cut-off filter wheel;
- Figure 2: shows the cut-off filter wheel from a different perspective;
- Figure 3: shows a second exemplary embodiment of the device for cut-off filtering according to the invention comprising a cut-off filter bar;
- Figure 4: shows the cut-off filter bar from a different perspective;
- Figure 5: shows a cut-off filter bar having continuously changing threshold wavelengths;
- Figure 6: shows a third exemplary embodiment of the device for cut-off filtering according to the invention comprising a retroreflector composed of a cut-off filter element and a mirror;
- Figure 7: shows the retroreflector of the third exemplary embodiment in different positions;
- Figure 8: shows a fourth exemplary embodiment of the device for cut-off filtering according to the invention comprising a cut-off filter element and a compensator plate;
- Figure 9: shows an exemplary embodiment of the laser beam generating device comprising the device for cut-off filtering according to the fourth exemplary embodiment;
- Figure 10: shows a fifth exemplary embodiment of the device for cut-off filtering; and
- Figure 11: exemplarily depicts how the fifth exemplary embodiment of the device for cut-off filtering can be used for spectral combination.

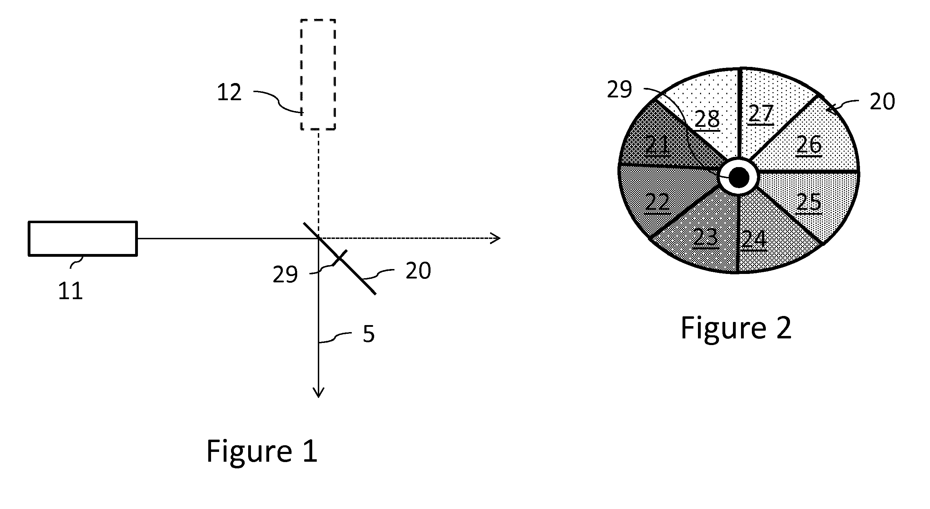

Figure 1 shows a first exemplary embodiment of the device for cut-off filtering comprising a cut-off filter wheel 20 which can be turned around an axis 29. In Figure 1, the cut-off filter wheel is shown as viewed from a direction perpendicular to the axis 29. Figure 2 shows the cut-off filter wheel 20 viewed along the axis 25 of the cut-off filter wheel 20. The filter wheel 20 is made of radial segments 21, 22, 23, 24, 25, 26, 27, 28 of dichroic mirrors having different threshold wavelengths. Hence by turning the filter wheel 20 different segments can be used having different threshold wavelengths. In the example there are 8 segments hence the filter wheel 20 has to be turned at most 45° to switch between the different segments wherein 360° corresponds to the full circle. Instead of a segmented filter wheel with discretely changing threshold wavelength a filter wheel with continuously changing threshold wavelength can be used.

In Figure 1, the cut-off filter wheel 20 is used in a laser beam generating device comprising a laser source element 11, exemplarily in form of a laser diode. A further laser diode 12 may be comprised optionally and therefore is shown in dashed lines, only. Light of the laser diode 11 can be cut-off filtered such that light having wavelengths longer than the threshold wavelength of the respective segment can transmit the cut-off filter wheel 20 and light having wavelengths shorter than the threshold wavelength of the respective segment is reflected by the cut-off filter wheel 20. The threshold wavelength can be adjusted by turning the cut-off filter wheel 20 and the output light path 5 remains unaffected.

Optionally, the reflected light having wavelengths shorter than the threshold wavelength can be combined with transmitted light of the further laser diode 12 wherein the transmitted light only comprises wavelengths at least as long as the threshold wavelength due to the filter wheel.

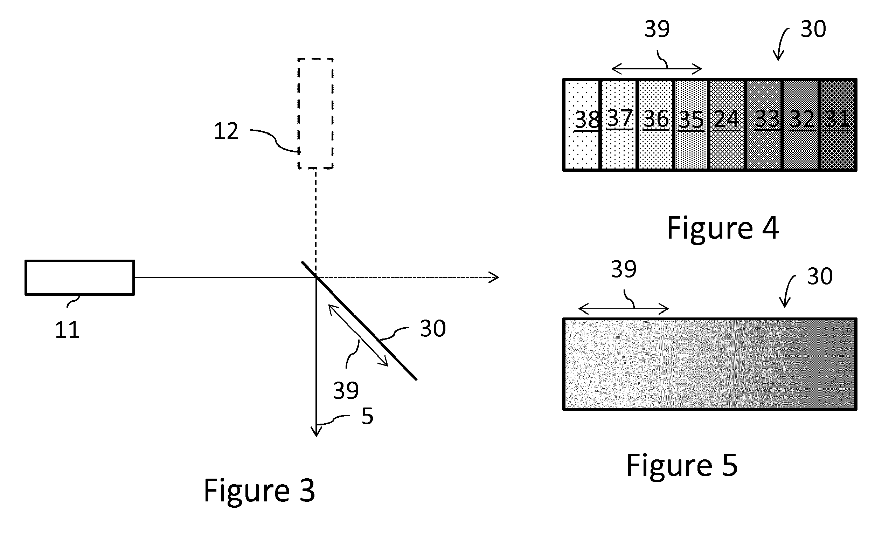

Figure 3 shows a second exemplary embodiment of the device for cut-off filtering comprising a cut-off filter bar 30 which can be moved linearly along a direction 39. In Figure 3, the cut-off filter bar 30 is shown as viewed from a direction parallel to a filtering surface of the cut-off filter bar 30. Figures 4 and 5 show different exemplary embodiments of the cut-off filter bar 30 viewed from a direction perpendicular to the filtering surface of the cut-off filter bar 30. The cut-off filter bar 30 in Figure 4 is made of segments 31, 32, 33, 34, 35, 36, 37, 38 of dichroic mirror material having different threshold wavelengths. The cut-off filter bar 30 in Figure 5 is made of dichroic mirror material with continuously changing threshold wavelength over the length of the cut-off filter bar 30.

Hence, by linear movement of the cut-off filter bar 30 different threshold wavelengths can be selected. The threshold wavelength can be adjusted by linear movement of the cut-off filter bar 30 and the output light path 5 remains unaffected.

Optionally, the reflected light having wavelengths shorter than the threshold wavelength can be combined with transmitted light of the further laser diode 12 wherein the transmitted light only comprises wavelengths at least as long as the threshold wavelength due to the filter bar.

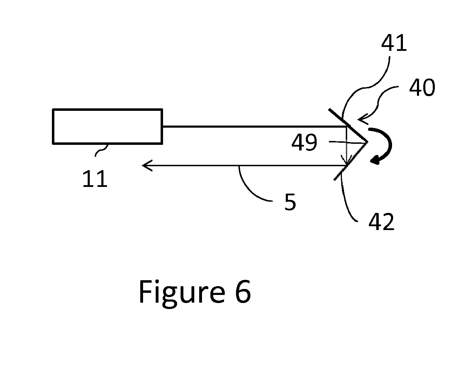

Figure 6 shows a third exemplary embodiment of the device for cut-off filtering according to the invention comprising a retroreflector 40. The retroreflector 40 is composed of a mirror 41 and a cut-off filter element 42, e.g. a dichroic mirror. The mirror 41 and the cut-off filter element 42 are attached to each other along an axis 49. The retroreflector 40 can be turned around the axis 49 or around parallel axis parallel to axis 49. For example, the retroreflector 40 may be moved from a first position to a second position.

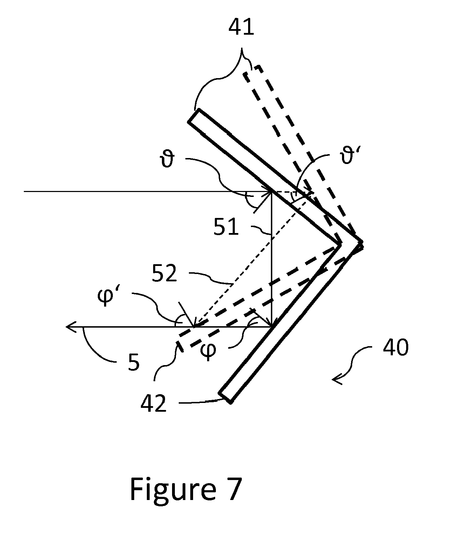

This is exemplarily depicted in Figure 7 wherein the retroreflector 40 is shown in the first position in solid lines and in the second position in dashed lines. As apparent, changing the position rotationally results in different incident angles ϑ, ϑ' wherein the incident angle is defined as the angle between the direction of the light with respect to the normal of the respective element which for the incident angles ϑ, ϑ' is the mirror 41. Thereby the light is reflected on different paths 51, 52 between mirror 41 and the cut-off filter element 42 dependent on the rotational position of the retroreflector. This causes the light to hit the cut-off filter element 42 at different further incident angles ϕ, ϕ' with respect to the normal of the cut-off filter element 42 wherein ϕ=90°- ϑ and ϕ'=90°- ϑ' and wherein 360° represent a full circle. In turn the light is subject to filtering with a different threshold wavelength dependent on the rotational position of the retroreflector. But, the output light path 5 remains unaffected.

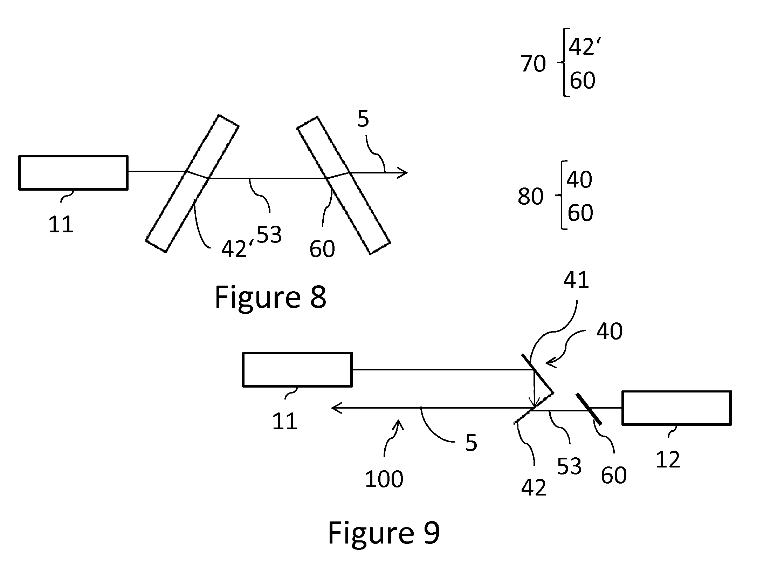

Figure 8 shows a fourth exemplary embodiment of the device for cut-off filtering comprising a dichroic mirror 42' and a compensator plate 60. The threshold wavelength effective to the light of laser source element 11 of the dichroic mirror 42' can be adjusted by turning the dichroic mirror 42'. In order to compensate the lateral shift such turning causes to the intermediate output path 53, the fourth exemplary embodiment comprises the compensator plate 60 which can be turned corresponding to the turning of the dichroic mirror 42' thereby causing an opposite lateral shift resulting in the final output path 5 remaining unaffected by adjustment of the threshold wavelength effective to the light of laser source element 11 of the dichroic mirror 42'.

Figure 9 exemplarily depicts how retroreflector 40 can be used together with compensator plate 60 for spectral combination in an exemplary embodiment of the inventive laser beam generating device 100. The compensator plate 60 is turned in accordance with the retroreflector 40 thereby shifting laterally the light path 53 between the compensator plate 60 and the cut-off filter element 42 of the retroreflector 40 such that the transmitted part of the light of a further laser source element 12 is transmitted on the output light path 5 which remains unaffected regardless of threshold wavelength adjustments by rotation of the retroreflector 40.

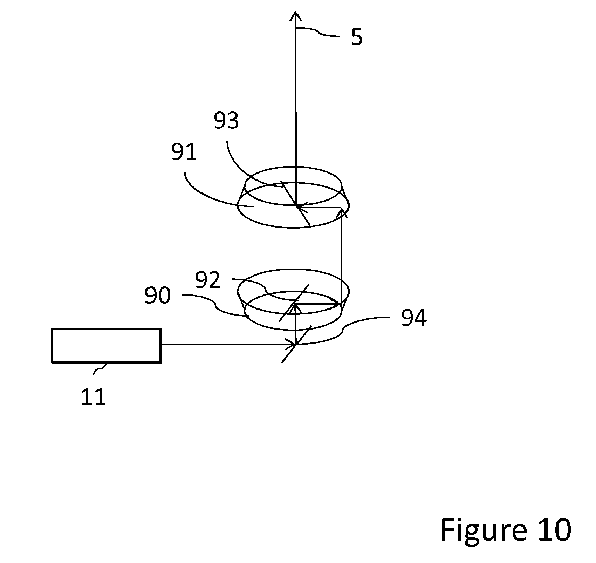

Figure 10 shows a fifth exemplary embodiment of the device for cut-off filtering comprising least a conical mirror ring 90. A center of the conical mirror ring 90 is arranged on an axis at a first axial position. Coaxially to the conical mirror ring 90 there is arranged a center of a conical cut-off filter ring 91 at a different second axial position of the axis. The conical mirror ring 90 and the conical cut-off filter ring 91 have different opening directions and are opening towards each other. The inclinations of the conical mirror ring 90 and the conical cut-off filter ring 91 are 45° wherein 360° represent a full circle. In the example the conical mirror ring 90 and the conical cut-off filter ring 91 have a same base diameter, a same height and hence a same top diameter. But in general it is only required that they have a common diameter range, i.e., that a top diameter of a larger one of the conical mirror ring 90 and the conical cut-off filter ring 91 is smaller than a bottom diameter of the smaller one of the conical mirror ring 90 and the conical cut-off filter ring 91.

Arranged at the first and the second position there are two scanning mirrors 92, 93. The mirrors have optical axes orthogonal to each other and inclined by 45° with respect to the axis. They can be turned in synchronization, i.e. while remaining orthogonal to each other as well as inclined by 45° with respect to the axis.

The conical cut-off filter ring 91 has different threshold wavelengths at different angular positions. Thus, the threshold wavelength can be adjusted by turning the scanning mirrors 92, 93. The output light path 5 remains unaffected from such threshold wavelength adjustments. Similar to the exemplary filter wheel, the conical cut-off filter ring 91 may be made of segments of dichroic mirror material having different threshold wavelengths. Or, the conical cut-off filter ring 91 is made of dichroic mirror material with continuously changing threshold wavelength over the angular range.

In the fifth exemplary embodiment a mirror 94 is arranged on the axis at a different third position. The mirror 94 is inclined by 45° with respect to the axis and remains static. The mirror 94 is optional. In the fifth exemplary embodiment, it is used to allow to irradiate light of a first laser diode 11 orthogonally to the axis and to reflect the light along the axis onto the scanning mirror 92 with in the conical mirror ring 90.

This is particularly useful for spectral combination.

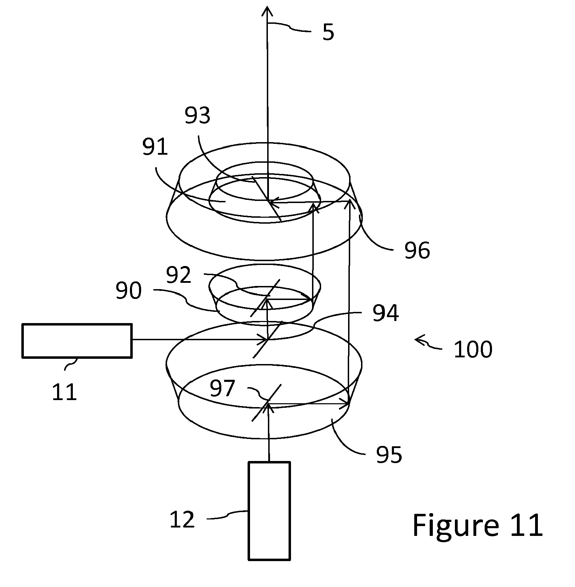

Figure 11 exemplarily depicts how the fifth exemplary embodiment of the device for cut-off filtering can be used together with two further conical mirror rings 95, 96 and a further scanning mirror 97 for spectral combination.

The two further conical mirror rings 95, 96 are arranged coaxially with the conical filter ring 90. One of the further conical mirror rings 96 is arranged concentrically with the conical cut-off filter ring 91, i.e. at the second position, and has a same opening direction as the conical cut-off filter ring 91. The one further conical mirror ring 96 has a different diameter range not intersecting with the same diameter range, i.e. a base diameter of the conical cut-off filter ring 91 is at most as large as the top diameter of the conical mirror ring 96. In the example the other further conical mirror ring 95 also has said different diameter range. But in general it is only required that they have a further common diameter range, i.e., that a top diameter of a larger one of the further conical mirror rings 95, 96 is smaller than a bottom diameter of the smaller one of the further conical mirror rings 95, 96. The other further conical mirror ring 95 is arranged at a third axial position different from the first and the second position and opening, opposite to the one further conical mirror ring 96, towards the one further conical mirror ring 96. Both of the further conical mirror rings 95, 96 have an inclination of 45°. At the third axial position, there is a further scanning mirror 97 with an optical axis parallel to that of the optical axis of scanning mirror 92 arranged in the conical mirror ring 90. It can be turned together with the scanning mirrors 92, 93 while maintaining its optical axis in parallel with that of the scanning mirror 92.

Along the axis light of a second laser diode 12 is irradiated onto the further scanning mirror 97. Then the threshold wavelength can be adjusted by turning the further scanning mirror 97 together with the scanning mirrors 92, 93 without affecting the output path 5.

### Reference signs

- 5: output light path
- 11, 12: laser source elements, e.g. laser diodes
- 20: cut-off filter wheel
- 21, 22, 23, 24, 25, 26, 27, 28: radial segments of the cut-off filter wheel
- 29: axis of the cut-off filter wheel for rotational movements
- 30: cut-off filter bar
- 31, 32, 33, 34, 35, 36, 37, 38: segments of the cut-off filter bar
- 39: direction of linear movement of the cut-off filter bar
- 40: retroreflector
- 41: mirror
- 42, 42, 42': cut-off filter elements, e.g. dichroic mirrors
- 51, 52, 53: light paths
- 60: compensator plate
- 70: system of dichroic mirror and compensator plate
- 80: system of retroreflector und compensator plate
- 90, 95, 96: conical mirror rings
- 91: conical cut-off filter ring
- 92, 93, 97: scanning mirrors
- 94: mirror
- 100: laser beam generating device

## Claims

1. Device (20, 30, 40, 70, 80) for optical cut-off filtering according to a threshold wavelength with one of light with wavelengths below the threshold wavelength and light with wavelengths above the threshold wavelength being reflected and the other being let pass, **characterized in that** the threshold wavelength can be adjusted without affecting a light path (5) of one of the reflected light and the light let pass.

2. The device (20, 30, 40, 70, 80) of claim 1, wherein into the unaffected light path further light can be spectrally combined by the device (20, 30, 40, 70, 80), the further light spectrally combined into the unaffected light path not sharing wavelength with the light with which it is combined on the unaffected light path.

3. The device of one of the preceding claims, comprising a cut-off filter wheel (20) having different threshold wavelengths at different angular positions wherein the threshold wavelength can be adjusted by turning the cut-off filter wheel (20).

4. The device of one of claims 1 and 2, comprising a cut-off filter bar (30) having different threshold wavelengths at different positions of a main axis of the cut-off filter bar (30) wherein the threshold wavelength can be adjusted by linearly moving the cut-off filter bar (30) along the main axis.

5. The device of one of claims 1 and 2, comprising at least one conical mirror ring (90) arranged coaxially with a conical cut-off filter ring (91) of same base diameter and a same inclination of 45° wherein the conical mirror ring (90) and the conical cut-off filter ring (91) open towards each other, the conical mirror ring (90) having its center at a first axial position and the conical cut-off filter ring (91) having its center at a different second axial position, the device further comprising scanning mirrors (92, 93) arranged at the first and the second axial position wherein the scanning mirrors (92, 93) have orthogonal optical axes which are inclined by 45°with respect to the axis of the conical rings and the conical cut-off filter ring (91) has different threshold wavelengths at different angular positions such that the threshold wavelength can be adjusted by turning the scanning mirrors (92, 93) while maintaining the optical axes orthogonal.

6. The device of claim 5 wherein the device is further in accordance with claim 2, the device further comprising two further conical mirror rings (95, 96) of which one is arranged concentrically with the conical cut-off filter ring (91) and has a same opening direction as the conical cut-off filter ring (91) and of which the other is arranged coaxially with the conical cut-off filter ring (91) at a different third axial position, and has a same opening direction as the conical mirror ring (90) wherein the first axial position is between the second and the third axial position, the two further conical mirror rings (95, 96) having a further same base diameter which is larger than the same base diameter wherein the other of the further conical mirror ring (95) has a corresponding further scanning mirror (97) wherein the further scanning mirror (97) has a further optical axis in parallel to the optical axis of the scanning mirror (92) corresponding to the conical mirror ring (90) wherein the threshold wavelength can be adjusted by turning the further scanning mirror (97) together with the scanning mirrors (92, 93) while maintaining the further optical axis in parallel to the optical axis of the scanning mirror (92) corresponding to the conical mirror ring (90).

7. The device (80) of claim 1, comprising a retroreflector (40) which comprises a mirror (41) attached to a cut-off filter element (42) such that optical axes of the mirror (41) and of the cut-off filter element (42) are perpendicular to each other wherein the retroreflector (40) can be turned around a further axis perpendicular to the optical axes for adjusting the threshold wavelength.

8. The device (80) of claim 2, comprising a retroreflector (40), the retroreflector (40) being composed of a mirror (41) attached to a cut-off filter element (42) such that optical axes of the mirror (41) and of the cut-off filter element (42) are perpendicular to each other wherein the filtering and the spectral combining can be achieved by the cut-off filter element (42), wherein the retroreflector (40) can be turned around a further axis perpendicular to the optical axes for adjusting the threshold wavelength thereby inducing in a variation a lateral position of a incident light path (53) on which the further light has to hit the cut-off filter element in order to be spectrally combined on the unaffected light path, the device further comprising a compensator plate (60) for diverting the further light onto the incident light path (53) wherein the variation can be compensated of the lateral position by turning the compensator plate (60) such that a further incident light path remains unchanged on which the further light has to hit the compensator plate (60) to be reflected on the incident light path (53).

9. The device of one of claims 3 to 8, wherein the threshold wavelength can be adjusted in discrete steps.

10. The device of one of claims 3 to 8, wherein the threshold wavelength can be adjusted continuously.

11. Laser beam generating device (100) wherein the laser beam generating device comprises: at least two devices of one of the preceding claims, a pair of laser source elements for emitting laser having a peak power at a maximum mean wavelength and a minimum mean wavelength and at least one further laser source element having a medium mean wavelength larger than the minimum mean wavelength and smaller than the maximum mean wavelength, wherein the at least two devices have different threshold wavelengths of which at least one is larger than the minimum mean wavelength and smaller than the medium mean wavelength and at least another one is smaller than the maximum mean wavelength and larger than the medium mean wavelength, wherein the at least two devices, the pair of laser source elements and the at least one further laser source element are arranged such that the at least two devices can combine light emitted by the pair of laser source elements and the at least one further laser source element, the laser beam generating device further comprising means for determining shift of at least the medium mean wavelength and means for adjusting the threshold wavelength of at least one of the at least two devices according the determined shift.

12. The laser beam generating device of claim 11 further comprising a power supply for supplying power to all laser source elements, wherein the shift depends on a current applied and wherein a maximum shift is larger than a difference between the different threshold wavelengths.

13. The laser beam generating device of claim 12, wherein the at least one further laser source element is configured to emit laser with a peak width at most equal to a maximum peak width wherein a sum of the maximum shift and the maximum peak width is larger than a difference between the different threshold wavelengths.
